# EUROPÄISCHE PATENTSCHRIFT

(11) **EP 2 266 861 B1**
(45) Veröffentlichungstag und Bekanntmachung des Hinweises auf die Patenterteilung: **07.05.2014**
(21) Anmeldenummer: 09007774.4
(22) Anmeldetag: 12.06.2009
(51) Int. Cl.: B61L 29/30

(54) **Verfahren und Vorrichtung zur Überwachung eines Gefahrenraumes an einem Bahnübergang**
Method and device for monitoring an area at risk at a level crossing
Procédé et dispositif de surveillance d'une zone de danger sur un passage à niveaux

(43) Veröffentlichungstag der Anmeldung: 29.12.2010
(73) Patentinhaber: Lorenz, Simone, 70190 Stuttgart (DE)
(72) Erfinder: Lorenz, Simone, 70190 Stuttgart (DE)
(74) Vertreter: Maser, Jochen

(56) Entgegenhaltungen:
- EP-A1- 1 849 679
- WO-A1-2006/011840
- WO-A1-2007/134430
- DE-A1- 1 919 468
- DE-A1-102007 060 303
- DE-U1- 29 623 877
- US-A- 5 787 369
- US-A1- 2002 185 571
- PICKEL P: "NEUE VOLLAUTOMATISCHE GEFAHRENRAUM-FREIMELDEANLAGE GFR" SIGNAL + DRAHT, TELZLAFF VERLAG GMBH. DARMSTADT, DE, Bd. 89, Nr. 12, 1. Dezember 1997 (1997-12-01), Seiten 41-43, XP000779908 ISSN: 0037-4997

## Beschreibung

Die Erfindung betrifft ein Verfahren und eine Vorrichtung zur Überwachung eines Gefahrenraumes an einem Bahnübergang, an dem eine Fahrstraße, ein Weg oder ein Platz ein oder mehrere Schienenfahrzeuggleise kreuzt.

An Bahnübergängen besteht eine erhöhte Unfallgefahr, Um dieser erhöhten Unfallgefahr entgegenzuwirken, werden Bahnübergänge mit Schranken gesichert. Sofern sich ein Schienenfahrzeug dem Bahnübergang nähert, werden die Fahrspuren zur Überquerung des Bahnüberganges für die Straßenverkehrsteilnehmer durch Schranken gesperrt. Die heutigen Schranken werden fast ausnahmslos ferngesteuert, das heißt, dass eine Kontrolle durch eine Aufsichtsperson nicht gegeben Ist. Deshalb kann es passieren, dass an Bahnübergängen mit solchen angesteuerten Schranken das Problem auftritt, dass sich in einem Gefahrenraum Personen, Verkehrsteilnehmer oder sonstige Objekte befinden, die insbesondere durch die Schranken eingeschlossen werden. Daraus resultiert der Bedarf, dass gegebenenfalls in dem Gefahrenraum vorhandene Verkehrsteilnehmer, Fahrzeuge oder Objekte rechtzeitig erfasst werden und eine Gefahrmeldung oder Besetztmeldung an eine entfernt liegende Stelle des Bahnüberganges, die dem Bahnübergang vorgelagert ist, übermittelt wird.

Aus der DE 196 23 524 A1 geht eine Einrichtung zur Gefahrenraumüberwachung an einem Bahnübergang hervor, welche eine Videokamera mit nachgeschalteter Bildauswerteeinheit umfasst, die dazu ausgelegt ist, selbständig mittels einer Grauwertauswertung der durch die Videokamera vom Bahnübergang aufgenommenen Bilder Objekte einer vorgegebenen Mindestgröße zu detektieren, die sich im Gefahrenraum befinden. In Abhängigkeit der Bildauswertung mittels Grauwertanalyse kann eine Gefahrenraumbesetzmeldung abgesetzt oder eine Gefahrenraum-freimeldung ausgegeben werden. Im ersten Fall kann das Schienenfahrzeug durch die Besetztmeldung noch rechtzeitig vor Erreichen des Gefahrenraumes zum Stehen gebracht werden, um die Kollision mit einem dortigen Objekt, welches zwischen den bereits geschlossenen Bahnschranken eingeschlossen ist, zu verhindern

Aus der DE 1 919 468 A1 ist ein Verfahren zur Überwachung eines Gefahrenraumes an einem Bahnübergang bekannt geworden, bei dem durch ein sich näherndes Schienenfahrzeug über einen Einschaltkontakt entfernt vom Bahnübergang eine Überwachungseinrichtung des Bahnüberganges aktiviert wird. Anschließend wird ein Lichtsignal am Bahnübergang aktiviert, bevor zumindest eine Einfahrschranke nach einer Signalanzeige abgesenkt wird. Durch eine Überwachungseinrichtung und eine Auswerteeinrichtung wird ein Gefahrenraum abgefragt. Hierbei sind ein Sender und ein Empfänger vorgesehen, wobei durch den Sender ein gebündelter Lichtstrahl ausgesendet wird, der über Reflektoren mehrfach umgelenkt wird und den Gefahrenraum kreuzt. Sofern ein Gegenstand oder eine Person bei dieser Überwachung erkannt wird, erfolgt eine Gefahrenraum-Besetztmeldung. Diese Anordnung weist den Nachteil auf, dass die benachbart zur den den Gefahrenraum kreuzenden Strahlen befindlichen Gegenstände oder Personen nicht erkannt werden.

Eine solche Einrichtung zur Überwachung weist den Nachteil auf, dass bei einer Videokamera die Problematik der Bildtiefenschärfe besteht, wodurch im Nah- oder Fernbereich, je nachdem, in welchem Bereich eine unscharfe Bilderfassung erfolgt, die Auswertung der Bilddaten schwierig oder beeinträchtigt ist. Dadurch kann eine Überwachung des Gefahrenraumes nicht sichergestellt werden. Insbesondere tritt dieses Problem bei Nebel, starkem Regen oder Schnee auf.

Der Erfindung liegt folglich die Aufgabe zugrunde, ein Verfahren und eine Vorrichtung zur Überwachung eines Gefahrenraumes an einem Bahnübergang bereitzustellen, bei dem das Vorhandensein von Objekten im Gefahrenraum des Bahnüberganges, insbesondere im Kreuzungsbereich zwischen der Straße, dem Weg oder dem Platz und der oder den Schienengleisen, mit relativ geringem Aufwand zuverlässig erkannt und gemeldet wird.

Diese Aufgabe wird erfindungsgemäß durch ein Verfahren gemäß den Merkmalen des Anspruchs 1 gelöst. Weitere vorteilhafte Ausgestaltungen und Weiterbildungen des Verfahrens sind in den weiteren Ansprüchen angegeben.

Das erfindungsgemäße Verfahren zur Überwachung eines Gefahrenraumes an einem Bahnübergang weist den Vorteil auf, dass die Überwachung des Gefahrenraumes durch zumindest zwei Laserscanner durchgeführt wird, die einander gegenüberliegend positioniert sind, so dass die jeweiligen Scannbereiche sich überlappen und sich zumindest soweit erstrecken, dass der gegenüberliegende Laserscanner im Scannbereich liegt. Ein Überdeckungsbereich der zumindest zwei Scannbereiche bildet eine Auswertefläche, die bevorzugt zumindest den Gefahrenüberwachungsraum überdeckt, wobei die Auswertefläche im Gefahrenraum durch Referenzpunkte begrenzt wird. Dadurch wird der Gefahrenraum in einfacher Weise vollständig und sicher abgescannt. Insbesondere können unabhängig der Entfernung des Laserscanners zu einzelnen Bereichen des zu überwachenden Gefahrenraumes exakte Scannwerte erfasst werden.

Nach einer weiteren bevorzugten Ausgestaltung der Erfindung ist vorgesehen, dass eine Echtzeitauswertung der erfassten Scannwerte durchgeführt wird. Dadurch werden eine schnelle Überwachung und eine umgehende Erfassung eines Gefahrenpotentials ermöglicht, wodurch die Sicherheit erhöht wird.

Des Weiteren ist bevorzugt vorgesehen, dass bei einer Auswertung der erfassten Scannwerte und der Ermittlung einer Gefahrenraumfreimeldung gegebenenfalls vorhandene Ausfahrschranken abgesenkt werden. Dadurch kann der Gefahrenraum des Bahnüberganges durch Ein- und Ausfahrschranken begrenzt und abgesperrt sein, bevor der Zug den Bahnübergang passiert. Anschließend können die Ein- und Ausfahrschranken gemeinsam angehoben werden.

Sobald der Zug den Bahnübergang passiert hat, werden zumindest die Einfahrschranken vollständig geöffnet und die Überwachungseinrichtung zurückgesetzt. Sofern an dem Bahnübergang Ausfahrschranken vorhanden sind, werden diese ebenfalls geöffnet. Durch das Zurücksetzen der Überwachungseinrichtung ist die Überwachungseinrichtung für nachfolgende Überwachungsaufgaben bei einem sich annähernden Schienenfahrzeug wieder bereitgestellt.

Die einander gegenüberliegenden Laserscanner sind bevorzugt in einem Eckbereich eines jeweiligen Gefahrenraumes positioniert und scannen eine Scannfläche in einem Winkel von wenigstens 20°, vorzugsweise 91° bis 120°, ab. Dadurch liegt der zumeist quadratisch oder rechteckig ausgebildete Gefahrenraum vollständig innerhalb der Auswertefläche, die zumindest eine Teilfläche des Überdeckungsbereiches darstellt. Alternativ kann dadurch eine parallelogrammförmige Auswertefläche gebildet werden, die dann erforderlich wird, wenn das Bahngleis und der zu überwachende Übergang nicht rechtwinklig zueinander verlaufen.

Nach einer weiteren alternativen Ausgestaltung des Verfahrens ist vorgesehen, dass jeweils ein Laserscanner an einem freien Ende einer Einfahrschranke befestigt und eine Scannfläche von wenigstens 180° abgescannt wird. Diese alternative Ausführungsform weist dieselben Vorzüge wie die vorgenannte Ausführungsform auf.

Nach einer weiteren vorteilhaften Ausgestaltung der Erfindung ist vorgesehen, dass nahe oder an Haltevorrichtungen der Einfahrschranken und jeweils benachbart zur Bildung einer rechteckigen, parallelogrammförmigen oder quadratischen Auswertefläche aufgestellt sind. Dadurch kann die Auswertefläche definiert und begrenzt und von der Auswerteeinrichtung exakt erfasst werden, um eine schnelle und einfache Auswertung zu ermöglichen.

Die Aufgabe wird des Weiteren erfindungsgemäß durch eine Vorrichtung zur Überwachung eines Gefahrenraumes an einem Bahnübergang gelöst. Die Ausgestaltung einer Überwachungseinrichtung mit zumindest zwei Laserscannern, welchen jeweils eine Auswerteeinrichtung zugeordnet ist, die in Echtzeit die von einer Auswertefläche erfassten Scannwerte auswertet, weist den Vorteil auf, dass eine sofortige Erfassung einer Gefahr im Kreuzungsbereich zwischen Straße und Schienengleis erfasst wird und ein Bremssignal ausgegeben werden kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Ansicht von oben auf einen Gefahrenraum an einem Bahnübergang mit einer ersten Ausführungsform von sich überlappenden Scannflächen und
- Figur 2: eine schematische Ansicht auf einen Gefahrenraum eines Bahnüberganges mit einer alternativen Scannflächenanordnung der Überwachungseinrichtung zu Figur1.

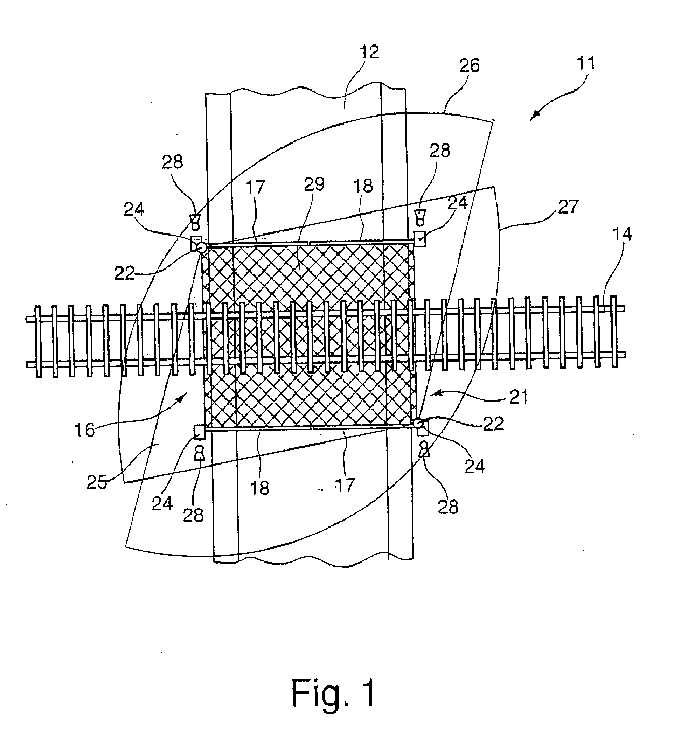

In Figur 1 ist schematisch eine Draufsicht auf einen Bahnübergang 11 dargestellt. Dieser Bahnübergang 11 ist bevorzugt als höhengleicher Bahnübergang 11 ausgebildet. Eine Fahrstraße 12 kreuzt beispielsweise ein Schienenfahrzeuggleis 14. Alternativ können ein oder mehrere Fahrstraßen 12 ein oder mehrere Schienenfahrzeuggleise 14 kreuzen. Anstelle von Fahrstraßen können auch Plätze oder Wege oder dergleichen vorgesehen sein. Ein Gefahrenraum 16, der sich zumindest aus dem Kreuzungsbereich zwischen der Fahrstraße 12 und dem Schienenfahrzeuggleis 14 bildet, ist zumindest durch eine Einfahrschranke 17 begrenzt. Dieser Einfahrschranke 17 ist ein nicht näher dargestelltes optisches Signal zugeordnet, welches zur Fahrstraße 12 hin ausgerichtet ist, um einem herannahenden Verkehrsteilnehmer zu signalisieren, dass sich demnächst ein Schienenfahrzeug dem Bahnübergang nähert und ein Absenken der Einfahrschranke 17 beginnen wird oder bereits eingeleitet ist. Bei manchen Bahnübergängen 11 ist der Einfahrschranke 17 gegenüberliegend eine Ausfahrschranke 18 vorgesehen. Der durch die Einfahrschranke 17 und gegebenenfalls Ausfahrschranke 18 auf jeder Seite des Schienengleises 14 begrenzte Bereich stellt einen Gefahrenraum dar, der zu überwachen ist.

Die Überwachung des Gefahrenraumes 16 erfolgt durch eine Überwachungseinrichtung 21, welche aus zumindest einer, vorzugsweise zwei oder mehreren, Laserscannern 22 besteht, denen jeweils eine nicht näher dargestellte Auswerteeinrichtung zugeordnet ist. Die Auswerteeinrichtungen sind miteinander in einer gemeinsamen Rechen- und Steuereinheit gekoppelt, um die von den jeweiligen Laserscannern 22 erfassten Daten beziehungsweise Scannwerte aufzubereiten, zu verarbeiten und zu ermitteln, ob gegebenenfalls ein Objekt sich im Gefahrenraum 16 befindet. Die Laserscanner 22 sind jeweils an einer Haltevorrichtung 24 der Einfahrschranke 17 befestigt und weisen einen aufeinander zugerichteten Scannbereich 26, 27 auf. Der Scannbereich 26 des Laserscanners 22 erstreckt sich bezüglich deren maximalen Entfernung zumindest bis zum gegenüberliegenden Laserscanner 22. Der Winkelbereich, durch den der Scannbereich begrenzt ist, beträgt wenigstens 90°. Dadurch wird ein Überdeckungsbereich 25 gebildet. Zusätzlich wird der Überdeckungsbereich 25 durch Referenzpunkte 28 markiert, so dass sich daraus eine Auswertefläche 29 bildet. Die Referenzpunkt 28 können die Schrankenantriebe oder ähnliche Gegenstände, wie Masten, Abgrenzungspfosten oder dergleichen sein. Die Referenzpunkte 28 sind nicht auf die Ausbildung als Lichtzeichen beschränkt. Aus einer solchen Anordnung ergibt sich folgende Gefahrenraumüberwachung:

Ein sich an den Bahnübergang 11 annäherndes Schienenfahrzeug schaltet an einem entfernt zum Bahnübergang 11 und vor diesem liegenden Einschaltkontakt die Überwachungseinrichtung 21 ein. Anschließend erfolgt bevorzugt eine Prüfung der Überwachungseinrichtung 21 auf deren Funktionalität. Gleichzeitig werden die Sicherungseinrichtungen, wie Lichtzeichen, Schaltrelais und Schranken, geprüft. Anschließend erfolgt beispielsweise das Einschalten der Lichtzeichen beziehungsweise Straßensignale auf gelb. Nachfolgend kann beispielsweise innerhalb von drei bis fünf Sekunden das Straßensignal auf rot umschalten. Dadurch wird gleichzeitig die Absenkbewegung der Einfahrschranken 17 gestartet. Zeitgleich oder versetzt danach erfolgt das Einschalten der Laserscanner 22 und die Überwachung des Gefahrenraumes 16 durch das Abscannen der Scannbereiche 26, 27.

Nach einer vorbestimmten Überwachungsperiode erfolgt eine Auswertung der erfassten Scannwerte, die von der Auswertefläche 29 erhalten wurden. Der Laserscanner 22 scannt dabei den Schwenkbereich 26, 27 ab und kann beispielsweise 38 Scanns/Sekunde oder mehr Scans/Sekunde durchführen. Dabei ist eine Echtzeitauswertung bezüglich gegebenenfalls sich in dem Gefahrenraum 16 befindlichen Objekten ermöglicht. Sofern sich Objekte in dem Gefahrenraum 16 befinden, wird eine Gefahrenraum-Belegtmeldung beziehungsweise Gefahrenraum-Besetztmeldung automatisch ausgegeben und an einen entfernt vom Bahnübergang 11 und vor diesem liegenden Überwachungskontakt an das herannahende Schienenfahrzeug ausgegeben, um rechtzeitig eine Bremsung einzuleiten.

Sofern beispielsweise an dem Bahnübergang 11 zusätzlich Ausfahrschranken 18 vorgesehen sind, senken diese sich bei einer solchen Gefahrenraum-Besetztmeldung nicht ab. Dadurch kann ermöglicht werden, dass das sich im Gefahrenraum 16 befindliche Objekt über diese offene Stelle aus dem Gefahrenraum 16 entfernen kann.

Sofern eine Freimeldung des Gefahrenraumes 16 folgt, kann eine gegebenenfalls vorgesehene Ausfahrschranke 18 ebenfalls abgesenkt werden. Anschließend wird nochmals bevorzugt eine Auswertung aller Scannwerte durchgeführt und der Gefahrenraum 16 überprüft.

Nachdem das Schienenfahrzeug den Bahnübergang 11 passiert hat, wird ein Signal ausgegeben, durch welches die Einfahrschranke 17 und die gegebenenfalls vorhandene Ausfahrschranke 18 geöffnet und die Überwachungseinrichtung 21 in eine Ausgangsposition zurückgesetzt werden.

Vor dem Beginn einer solchen Überwachung als auch nach einer erfolgten Überwachung kann ein Selbsttest der Überwachungseinrichtung 21 durchgeführt werden. Dieser Selbsttest kann gleichzeitig zur Einstellung der Laserscanner 22 auf die Referenzpunkte 24 dienen beziehungsweise eine solche Einstellung umfassen.

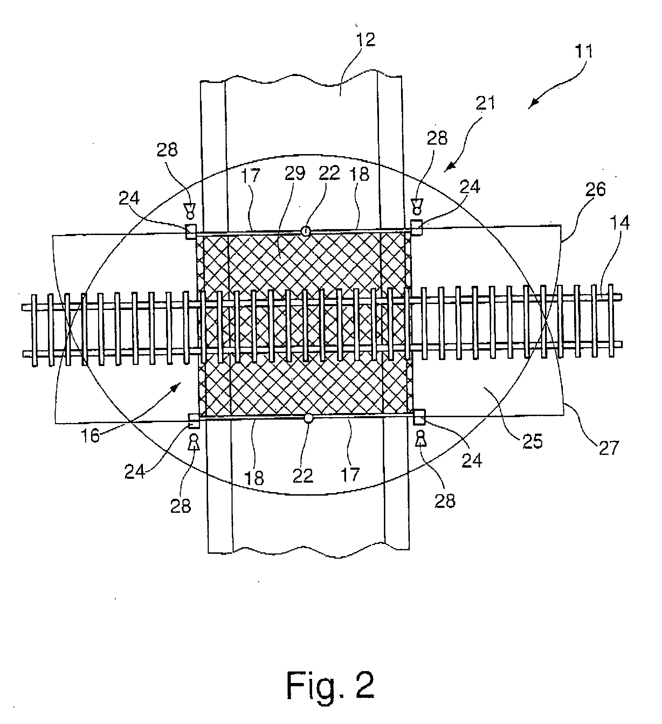

In Figur 2 ist eine alternative Gefahrenraumüberwachungsstrategie zu Figur 1 dargestellt.

Bei dieser Gefahrenraumüberwachung sind die Laserscanner 22 beispielsweise am freien Ende der jeweiligen Einfahrschranke 17 vorgesehen. In einer abgesenkten Position scannen diese Laserscanner 22 den Gefahrenraum 16 ab, wobei bevorzugt ein Scannbereich 26, 27 von wenigstens 180° vorgesehen ist. Daraus ergibt sich wiederum eine Auswertefläche 29, die durch den Überdeckungsbereich 25 der Scannbereiche 26, 27 und insbesondere durch Begrenzung des Überdeckungsbereiches 25 mittels den Referenzpunkten 28 gebildet wird. Die Durchführung des Verfahrens zur Überwachung des Gefahrenraumes 16 gemäß Figur 2 erfolgt in Analogie zu den beschriebenen Verfahren in Figur 1.

Des Weiteren kann alternativ vorgesehen sein, dass anstelle von zwei Scannbereichen 26, 27 mehrere Scannbereiche vorgesehen sind, wobei dementsprechend auch mehrere Laserscanner 22 angeordnet sind.

Der Einsatz von Laserscannern 22 ermöglicht des Weiteren, dass auch eine erhöhte Aufstellung, beispielsweise in den Schranken oder separaten Pfosten oder Trägern, ermöglicht ist. Des Weiteren ermöglichen solche Laserscanner 22 aufgrund deren geringen Bauteilhöhe verschiedene Einbauarten am Bahnübergang 11, Darüber hinaus weist der Laserscanner 22 den Vorteil auf, dass die Größe des jeweiligen Scannbereiches 26, 27 als auch der Winkelbereich des Scannbereiches 26, 27 flexibel einstellbar sind, so dass eine solche Überwachungseinrichtung 21 auf jegliche Gefahrenraumüberwachungen an Bahnübergängen 11 einsetzbar ist.

## Patentansprüche

1. Verfahren zur Überwachung eines Gefahrenraumes (16) an einem Bahnübergang (11),
- bei dem durch ein sich näherndes Schienenfahrzeug über einen Einschaltkontakt entfernt vom Bahnübergang (11) eine Überwachungseinrichtung (21) des Bahnüberganges (11) aktiviert wird,
- bei dem ein Lichtsignal am Bahnübergang (11) aktiviert wird,
- bei dem zumindest eine Einfahrschranke (17) nach einer Signalanzeigezeit abgesenkt wird,
- bei dem die Überwachungseinrichtung (21) mit zumindest einem Laser und einer Auswerteeinrichtung eingeschalten und der Gefahrenraum (16) geprüft wird,
- bei dem eine Auswertung der erfassten Werte durch den zumindest einen Laser erfolgt bis das Schienenfahrzeug einen weiteren Überwachungskontakt erreicht hat,
- bei dem bei einer Gefahrenraum-Besetztmeldung ein Bremssignal für das Schienenfahrzeug ausgegeben wird oder
- bei dem bei einer Gefahrenraum-Freimeldung zumindest die Einfahrschranken (17) geöffnet werden, sobald das Schienenfahrzeug den Bahnübergang (11) passiert hat,
**dadurch gekennzeichnet,**
- **dass** die Überwachungseinrichtung (21) zumindest zwei Laserscanner (22) umfasst,
- **dass** die zumindest zwei Laserscanner (22) einander gegenüberliegend an den Gefahrenraum (16) angrenzen oder außerhalb des Gefahrenraumes (16) positioniert werden, so dass die jeweiligen Scannbereiche (26, 27) sich überlappen und durch die sich überlappenden Scannbereiche (26, 27) eine Auswertefläche (29) gebildet wird, welche zumindest dem Gefahrenraum (16) entspricht und
- **dass** die Auswertefläche (29) im Gefahrenraum (16) durch Referenzpunkte (28) begrenzt wird.

2. Verfahren nach Anspruch 1, **dadurch gekennzeichnet, dass** eine Echtzeitauswertung der erfassten Scannwerte durch die Auswerteeinrichtung durchgeführt wird.

3. Verfahren nach Anspruch 1 oder 2, **dadurch gekennzeichnet, dass** bei einer Auswertung der erfassten Scannwerte und der Ermittlung einer Gefahrenraum-Freimeldung die zumindest eine Ausfahrschranke (18) abgesenkt wird.

4. Verfahren nach einem der vorhergehenden Ansprüche, **dadurch gekennzeichnet, dass** zumindest nach dem vollständigen Öffnen der Einfahrschranken (17) oder der Einfahrschranken (17) und Ausfahrschranken (18) die Überwachungseinrichtung (21) zurückgesetzt wird.

5. Verfahren nach einem der vorhergehenden Ansprüche, **dadurch gekennzeichnet, dass** jeweils ein Laserscanner (22) in einem Eckbereich des Gefahrenraumes (16) positioniert und ein Scannbereich (26, 27) in einem Winkel von wenigstens 20°, vorzugsweise 91° bis 120°, abgescannt wird.

6. Verfahren nach einem der Ansprüche 1 bis 4, **dadurch gekennzeichnet, dass** jeweils ein Laserscanner (22) an einem freien Ende einer Einfahrschranke (17) befestigt und vorzugsweise eine Scannfläche (26, 27) in einem Winkel von wenigstens 180° abgescannt wird.

7. Verfahren nach einem der vorhergehenden Ansprüche, **dadurch gekennzeichnet, dass** die Referenzpunkte (28) nahe oder an Halte-vorrichtungen (24) der Einfahrschranken (17) angeordnet und jeweils benachbart hierzu zur Bildung einer rechteckigen, quadratischen oder parallelogrammförmigen Auswertefläche (29) im Gefahrenraum (16) aufgestellt sind.

8. Vorrichtung zur Überwachung eines Gefahrenraumes (16) an einem Bahnübergang (11) nach einem der Ansprüche 1 bis 7, **dadurch gekennzeichnet, dass** mit zumindest einer Überwachungseinrichtung (21), die aus zumindest zwei Laserscannern (22) und einer jedem Laserscanner (22) zugeordneten Auswerteeinheit besteht, welche in Echtzeit die vor einer Auswertefläche (29) erfassten Scannwerte auswerten, eine Gefahrenraum-Frei- oder -Besetztmeldung ausgegeben wird.

## Claims

1. A method of monitoring a danger zone (16) at a railway level crossing (11),
- in which at a location distant from the level crossing (11) a monitoring installation (21) of said level crossing (11) is activated by an approaching rail vehicle via a make contact,
- in which a light signal is activated at the level crossing (11),
- in which at least one entrance barrier (17) is lowered after the signal has been displayed for a given time,
- in which the monitoring installation (21) having at least one laser and one evaluation device is turned on and the danger zone (16) is controlled,
- in which an evaluation of the detected values is being performed by the at least one laser until the rail vehicle has reached a further monitoring contact,
- in which in the case of a 'danger zone occupied' indication, a braking signal for the rail vehicle is output , or
- in which in the case of a 'danger zone clear' indication, at least the entrance barriers (17) are opened once the rail.vehicle has passed the level crossing (11),
**characterised in that**
- the monitoring installation (21) comprises at least two laser scanners (22),
- the at least two laser scanners (22) adjoin the danger zone (16) or are positioned outside the danger zone (16) at a location opposing each other in such a manner that the respective scanning ranges (26, 27) overlap and the overlapping scanning ranges (26, 27) form an evaluation surface (29) which corresponds at least to the danger zone (16), and
- the evaluation surface (29) in the danger zone (16) is delimited by reference points (28).

2. The method as claimed in claim 1, **characterised in that** a real-time evaluation of the detected scan values is effected by the evaluation device.

3. The method as claimed in claim 1 or 2, **characterised in that** upon evaluation of the obtained scan values and determination of a 'danger zone clear' indication, the at least one exit barrier (18) is lowered.

4. The method as claimed in any of the preceding claims, **characterised in that** the monitoring installation (21) undergoes a reset process at least after the entrance barriers (17) or the entrance barriers (17) and the exit barriers (18) have been completely opened.

5. The method as claimed in any of the preceding claims, **characterised in that** a laser scanner (22) is positioned in a corner area of the danger zone (16), respectively, and a scanning range (26, 27) is scanned in an angle of at least 20°, preferably 91° to 120°.

6. The method as claimed in any one of claims 1 to 4, **characterised in that** a laser scanner (22) is fastened to a free end of an entrance barrier (17), respectively, and preferably a scanning surface (26, 27) is scanned in an angle of at least 180°.

7. The method as claimed in any of the preceding claims, **characterised in that** the reference points (28) are arranged close to, or on, holding devices (24) of the entrance barriers (17) and are placed adjacent thereto so as to form a rectangular, square, or parallelogram-shaped evaluation surface (29) within the danger zone (16).

8. An apparatus for monitoring a danger zone (16) at a level crossing (11) as claimed in any one of claims 1. to 7, **characterised in that** using at least one monitoring installation (21) which consists of at least two laser scanners (22), each having an evaluation unit attributed thereto that evaluates in real time the detected scan values in front of an evaluation surface (29), a 'danger zone clear' or 'danger zone occupied' indication is output.

## Revendications

1. Procédé destiné à surveiller une zone,de danger (16) sur un passage à niveau (11),
- lors duquel à un endroit éloigné du passage à niveau (11), un dispositif de surveillance (21) du passage à niveau (11) est activé, à l'approche d'un véhicule ferroviaire, par un contact de fermeture,
- lors duquel un signal lumineux est activé au passage à niveau (11),
- lors duquel au moins une barrière d'entrée (17) est abaissée après que le signal ait été affiché un temps donné,
- lors duquel le dispositif de surveillance (21) comprenant au moins un laser et un dispositif d'évaluation est mis en marche et la zone de danger (16) est contrôlée,
- lors duquel une évaluation des valeurs saisies par ledit au moins un laser est effectuée jusqu'à ce que le véhicule ferroviaire ait atteint un autre contact de surveillance,
- lors duquel, dans le cas d'un message indiquant que le passage à niveau est occupé, un signal de freinage destiné au véhicule ferroviaire est émis ou
- lors duquel, dans le cas d'un message indiquant que le passage à niveau est libre, au moins les barrières d'entrée (17) sont ouvertes dès que i le véhicule ferroviaire a franchi le passage à niveau (11),
**caractérisé en ce que**
- le dispositif de surveillance (21) comprend au moins deux scanneurs laser (22),
- lesdits au moins deux scanneurs laser (22) sont situés à l'opposé l'un de l'autre de manière contiguë à la zone de danger (16) ou sont positionnés à l'extérieur de la zone de danger (16) de sorte que les zones de scannage respectifs (26, 27) se chevauchent et que de par le chevauchement des zones de scannage (26, 27) soit formée une surface d'évaluation (29) qui correspond au moins à la zone de danger (16) et
- la surface d'évaluation (29) située dans la zone de danger (16) est délimitée par des points de référence (28).

2. Procédé selon la revendication 1, **caractérisé en ce qu'**une évaluation en temps réel des valeurs de scannage saisies est effectuée par le dispositif d'évaluation.

3. Procédé selon la revendication 1 ou 2, **caractérisé en ce que** lors d'une évaluation des valeurs de scannage saisies et de la détermination d'un message indiquant que la zone de danger est libre, ladite au moins une barrière de sortie (18) est abaissée.

4. Procédé selon l'une des revendications précédentes, **caractérisé en ce qu'**au moins après l'ouverture complète des barrières d'entrée (17) ou des barrières d'entrée (17) et des barrières de sortie (18), le dispositif de surveillance (21) est remis à l'état initial.

5. Procédé selon l'une quelconque des revendications précédentes, **caractérisé en ce qu'**un scanneur laser (22) est respectivement positionné dans une zone d'angle de la zone de danger (16) et qu'une zone de scannage (26, 27) est scannée dans un angle d'au moins 20°, de préférence compris entre 91° et 120°.

6. Procédé selon l'une quelconque des revendications 1 à 4, **caractérisé en ce qu'**un scanneur laser (22) est fixé respectivement à une extrémité libre d'une barrière d'entrée (17) et que de préférence une surface de scannage (26, 27) est scannée dans un angle d'au moins 180°.

7. Procédé selon l'une quelconque des revendications précédentes, **caractérisé en ce que** les points de référence (28) sont disposés sur des dispositifs de retenue (24) des barrières d'entrée (17) ou à proximité de ces derniers et sont mis en place de manière contiguë à chacun de ceux-ci afin de former une surface d'évaluation (29) rectangulaire, carrée ou en forme de parallélogramme dans la zone de danger (16).

8. Dispositif destiné à surveiller une zone de danger (16) sur un passage à niveau (11) selon l'une quelconque des revendications 1 à 7, **caractérisé en ce qu'**un message indiquant que la zone de danger est libre ou occupée est émis à l'aide d'au moins un dispositif de surveillance (21) qui est composé d'au moins deux scanneurs laser (22) et d'unités d'évaluation affectées respectivement audits scanneurs laser (22) lesquelles évaluent en temps réel les valeurs de scannage saisies devant une surface d'évaluation (29).
